# EUROPÄISCHE PATENTSCHRIFT

(11) **EP 3 531 878 B1**
(45) Veröffentlichungstag und Bekanntmachung des Hinweises auf die Patenterteilung: **15.03.2023**
(21) Anmeldenummer: 17816388.7
(22) Anmeldetag: 30.10.2017
(51) Int. Cl.: A47F 3/04, A47J 36/24, A47F 10/06, F25D 19/00

(54) **KÜHL- UND WÄRMEWANNE FÜR GASTRONOMIEBEHÄLTER**
COOLING AND HEATING TRAY FOR GASTRONOMY CONTAINERS
CUVE DE RÉFRIGÉRATION ET DE CHAUFFAGE POUR BACS GASTRONORME

(30) Priorität: 31.10.2016 AT 509972016
(43) Veröffentlichungstag der Anmeldung: 04.09.2019
(73) Patentinhaber: Hoeller Holding GmbH, 3300 Amstetten (AT)
(72) Erfinder: HÖLLER, Josef, 3363 Neufurth (AT); HÖLLER, Joachim, 3311 Zeillern (AT)
(74) Vertreter: Müllner, Martin
(86) Internationale Anmeldenummer: PCT/AT2017/060290
(87) Internationale Veröffentlichungsnummer: WO 2018/076036

(56) Entgegenhaltungen:
- WO-A1-00/66958
- WO-A1-2006/032408
- DE-U1-202011 050 444
- US-A1- 2011 277 644

## Beschreibung

### Technisches Gebiet

Die vorliegende Erfindung betrifft eine Kühl- und Wärmewanne für Gastronomiebehälter, die einen Boden und Seitenwände aufweist, wobei eine Heizeinrichtung und eine Kühleinrichtung zum wahlweisen Betrieb als Wärmewanne oder als Kühlwanne vorgesehen sind und wobei die Heizeinrichtung den Boden erhitzt.

### Stand der Technik

Kühlwannen und Wärmewannen sind in Restaurants zum Anrichten von Büffets weit verbreitet. Es handelt sich um Wannen genormter Größen, in die so genannte Gastronomiebehälter, die ebenfalls genormte Größen haben, eingehängt werden können. Meist kann jede Wanne nur eine Funktion erfüllen, also entweder Kühlen oder Wärmen, es sind aber auch kombinierte Kühl- und Wärmewannen bekannt, siehe z.B.

DE 20 2011 05 444U oder WO 0066958.

Sowohl bei Kühlwannen als auch bei Wärmewannen sind zwei verschiedene Betriebsweisen möglich: entweder trocken oder mit Wasserbad (Bain Marie). In der Betriebsweise Bain Marie muss die Wanne natürlich absolut wasserdicht sein, und zwar über viele Jahre; es wäre höchst unangenehm, würden die Restaurantgäste in eine Wasserpfütze treten, wenn sie sich Speisen nehmen möchten.

Bei trockenem Betrieb sollte die Wärmewanne in der Lage sein, Temperaturen von bis zu 140°C zu erzeugen, um die Speisen im Gastronomiebehälter auf der gewünschten Temperatur zu halten. Wenn eine Kühlwanne andererseits auch zum Ausgeben von Speiseeis geeignet sein soll, muss sie Temperaturen von deutlich unter 0°C erreichen können.

Gemäß der erwähnten DE 202011050444 U ist die Heizeinrichtung als Ceranglasplatte ausgebildet, die den Boden der Wanne bildet. Mit Ceranglasplatten kann man zwar hohe Temperaturen erreichen, es ist aber die Betriebsart Bain Marie nicht möglich. Die Kühleinrichtung ist gemäß dieser Schrift als Kühlrohr ausgebildet, das ausschließlich die Seitenwände kühlt. Damit können aber keine Temperaturen deutlich unter 0°C erreicht werden.

Bekannte Wärmewannen für die Betriebsart Bain Marie sind oft aus Chromstahl gebildet. Wenn man diese trocken betreibt und auf Temperaturen von rund 140°C erhitzt, verziehen sie sich und werden dadurch unbrauchbar, weil sich dann die Gastronomiebehälter nicht mehr einhängen lassen.

### Darstellung der Erfindung

Es ist Aufgabe der vorliegenden Erfindung, eine Kühl- und Wärmewanne zu schaffen, die sowohl in trockener Betriebsart als auch in der Betriebsart Bain-Marie betrieben werden kann und die auch zur Ausgabe von Speiseeis geeignet ist.

Diese Aufgabe wird durch eine Kühl- und Wärmewanne der eingangs genannten Art erfindungsgemäß dadurch gelöst, dass der Boden mit einer Sandwichplatte, vorzugsweise bestehend aus einer Schicht Edelstahl, einer Schicht Aluminium und einer Schicht Edelstahl, an mehreren Stellen fest verbunden ist.

Bevorzugter Edelstahl ist Chromstahl. Der Begriff Chromstahl soll andere Legierungsbestandteile nicht ausschließen, er umfasst also insbesondere Chromnickelstahl.

Erfindungsgemäß ist die Kühl- und Wärmewanne also - wie bei Wärmewannen Bain Marie üblich - aus Edelstahl (Chromstahl) hergestellt. Dies ist durch Biegen und Schweißen möglich, sodass die Wasserdichtigkeit über Jahrzehnte hinweg kein Problem ist. Wie erwähnt neigen solche Wannen aber dazu, sich zu verziehen, wenn sie stark erhitzt werden. Aus diesem Grund ist der Boden mit einer Sandwichplatte versteift. Aus Gewichtsgründen besteht die mittlere Schicht aus Aluminium, oben und unten ist jeweils eine Schicht aus Edelstahl (Chromstahl) vorgesehen. Dadurch erhält die Sandwichplatte eine sehr hohe Biegesteifigkeit bei relativ geringem Gewicht und guter Wärmeleitfähigkeit. Die Sandwichplatte ist mit dem Boden an zahlreichen Punkten fest verbunden, z.B. verschraubt, sodass sich der Boden nicht verziehen kann.

Da im Gegensatz zur DE 202011050444 U der Boden nicht aus Glas besteht, besteht darüber hinaus die Möglichkeit, auch diesen über Kühlrohre zu kühlen, sodass Temperaturen von deutlich unter 0°C erreichbar sind.

Die Verbindung zwischen dem Boden und der Sandwichplatte erfolgt zweckmäßiger Weise so, dass an den Boden mehrere Schraubenbolzen angeschweißt sind, mittels derer die Sandwichplatte am Boden angeschraubt ist. Dadurch kann an zahlreichen Stellen eine feste Verbindung zwischen Boden und Sandwichplatte sichergestellt werden.

Vorzugsweise besteht die Kühleinrichtung aus zumindest einem Kühlrohr, das bzw. die an der Unterseite der Sandwichplatte und an den Seitenwänden fest anliegt bzw. anliegen. Alternativ dazu kann in die mittlere Schicht der Sandwichplatte ein Kühlkanal eingearbeitet sein oder es kann ein Kühlrohr darin eingegossen sein.

Die Heizeinrichtung besteht vorzugsweise aus zumindest einer Silicon-Flächenheizung, die an der Unterseite der Sandwichplatte anliegt.

### Kurze Beschreibung der Zeichnungen

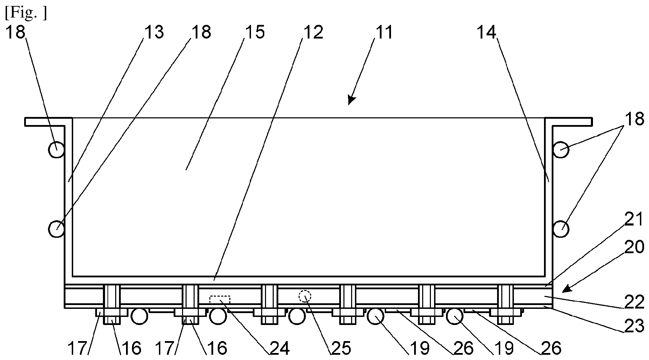

An Hand der beiliegenden Zeichnung wird die vorliegende Erfindung näher erläutert. Die einzige Figur zeigt eine erfindungsgemäße Kühl- und Wärmewanne im Schnitt.

### Bester Weg zur Ausführung der Erfindung

Die insgesamt mit 11 bezeichnete Kühl- und Wärmewanne hat einen Boden 12 und Seitenwände 13, 14, 15. (Die vierte Seitenwand befindet sich vor der Zeichenebene.) Wie man sieht, können der Boden 12 und die Seitenwände 13, 14 aus einem Stück Chromstahl gebogen sein. Die Seitenwand 15 und die vierte, nicht sichtbare Seitenwand, ebenfalls aus Chromstahl, sind angeschweißt. Insgesamt ergibt sich damit eine für viele Jahre wasserdichte Wanne.

Am Boden 12 sind Schraubenbolzen 16 angeschweißt, die mittels Muttern 17 eine Sandwichplatte 20 halten. Die Sandwichplatte 20 besteht aus einer Schicht Chromstahl 21, einer Schicht Aluminium 22 und einer weiteren Schicht Chromstahl 23. Die Schichten 21-23 sind durch Kleben oder Verpressen miteinander fest verbunden. Durch die beiden beabstandeten Schichten Chromstahl 21 und 23 ist die Sandwichplatte 20 sehr biegesteif, durch die Verwendung von Aluminium als Zwischenschicht aber dennoch nicht allzu schwer. Insgesamt wird durch die biegesteife Sandwichplatte 20, die durch zahlreiche Schraubenbolzen 16 mit dem Boden 12 verbunden ist, die gesamte Kühl- und Wärmewanne 11 vor Verziehen durch große Hitze geschützt.

An den Seitenwänden 13, 14 sind Kühlrohre 18 angebracht (ebenso an den beiden anderen Seitenwänden, aber dies ist in der Figur nicht sichtbar). Für den Boden 12 sind verschiedene Möglichkeiten der Kühlung möglich. Es können Kühlrohre 19 unten an der Sandwichplatte 20 angebracht sein, es können aber auch in der Schicht Aluminium 22 Kühlkanäle eingefräst sein, wie bei 24 strichliert angedeutet, oder es können Kühlrohre eingegossen sein, wie bei 25 strichliert angedeutet.

Wenn Kühlrohre 19 vorhanden sind, dann sind Silicon-Heizmatten 26 zwischen diesen angebracht; andernfalls kann eine großflächige Silicon-Heizmatte angebracht werden.

Die Kühlrohre 18, 19, 25 oder Kühlkanäle 24 werden von einem Kältemittel durchströmt. Die Kühlung des Kältemittels kann zentral erfolgen, es ist aber ebenso möglich, ein Kühlaggregat unmittelbar unter der Kühl- und Wärmewanne 11 anzubringen, wie dies aus der DE 202011050444 U bekannt ist, sodass ein Inselbetrieb möglich ist.

Die Kühlrohre 18, 19 bestehen aus Kupfer. An den Seitenwänden 13, 14 sind sie mit Blechteilen befestigt, am Boden 12 mit Alubändern angeklebt. Sie sind wie üblich von Isoliermaterial umgeben, das Isoliermaterial selbst ist durch Abdeckbleche geschützt. Dadurch werden die Kühlrohre 18, 19 zusätzlich fixiert bzw. angedrückt.

Durch die erfindungsgemäße Kühl- und Wärmewanne werden vier Funktionen ermöglicht:
Kühlen (trocken)
Kühlen mittels Wasserbad
Wärmen mittels Wasserbad
Wärmen mit Trockenhitze

Es können Temperaturen von -5°C bis +140°C erreicht werden.

## Patentansprüche

1. Kühl- und Wärmewanne (11) für Gastronomiebehälter zum wahlweisen Betrieb als Wärmewanne oder als Kühlwanne , die einen Boden (12) und Seitenwände (13, 14, 15) aufweist, wobei sowohl der Boden (12) als auch die Seitenwände (13, 14, 15) aus Edelstahl bestehen, und wobei eine Kühleinrichtung vorgesehen ist, die sowohl die Seitenwände (13, 14, 15) als auch den Boden (12) kühlt, wobei weiters eine Heizeinrichtung, die den Boden (12) erhitzt, vorgesehen ist und **dadurch gekennzeichnet, dass** der Boden (12) mit einer Sandwichplatte (20), vorzugsweise bestehend aus einer Schicht Edelstahl (21), einer Schicht Aluminium (22) und einer Schicht Edelstahl (23), an mehreren Stellen fest verbunden ist.

2. Kühl- und Wärmewanne nach Anspruch 1, **dadurch gekennzeichnet, dass** an den Boden (12) mehrere Schraubenbolzen (16) angeschweißt sind, mittels derer die Sandwichplatte (20) am Boden (12) angeschraubt ist.

3. Kühl- und Wärmewanne nach Anspruch 1 oder 2, **dadurch gekennzeichnet, dass** die Kühleinrichtung aus zumindest einem Kühlrohr (18, 19) besteht, das bzw. die an der Unterseite der Sandwichplatte (20) und an den Seitenwänden (13, 14, 15) fest anliegt bzw. anliegen.

4. Kühl- und Wärmewanne nach Anspruch 1 oder 2, **dadurch gekennzeichnet, dass** in die mittlere Schicht (22) der Sandwichplatte (20) ein Kühlkanal (24) eingearbeitet oder ein Kühlrohr (25) eingegossen ist und dass ein Kühlrohr (18) an den Seitenwänden fest anliegt.

5. Kühl- und Wärmewanne nach einem der Ansprüche 1 bis 4, **dadurch gekennzeichnet, dass** die Heizeinrichtung aus zumindest einer Silicon-Flächenheizung (26) besteht, die an der Unterseite der Sandwichplatte (20) anliegt.

## Claims

1. A cooling and heating trough (11) for gastronomy containers for an optional operation as a heating trough or as a cooling trough, which includes a bottom (12) and side walls (13, 14, 15), wherein both the bottom (12) and the side walls (13, 14, 15) are made of stainless steel, and wherein a cooling device is provided which cools both the side walls (13, 14, 15) and the bottom (12), wherein further a heating device which heats the bottom (12) is provided, and **characterised in that** the bottom (12) is firmly connected at a plurality of locations to a sandwich plate (20), which is preferably made of a layer of stainless steel (21), a layer of aluminium (22), and a layer of stainless steel (23).

2. The cooling and heating trough according to claim 1, **characterised in that** a plurality of screw bolts (16) are welded to the bottom (12), by means of which the sandwich plate (20) is screwed to the bottom (12).

3. The cooling and heating trough according to claim 1 or 2, **characterised in that** the cooling device is made of at least one cooling tube (18, 19), which rest(s) firmly on the underside of the sandwich plate (20) and on the side walls (13, 14, 15).

4. The cooling and heating trough according to claim 1 or 2, **characterised in that** into the middle layer (22) of the sandwich plate (20) a cooling channel (24) is incorporated or a cooling pipe (25) is cast, and **in that** a cooling pipe (18) rests firmly against the side walls.

5. The cooling and heating trough according to any one of claims 1 to 4, **characterised in that** the heating device is made of at least one silicone surface heating (26) which rests on the underside of the sandwich plate (20).

## Revendications

1. Bac de refroidissement et de réchauffement (11) destiné à des récipients de restauration, lequel permet optionnellement un fonctionnement en mode bac de réchauffement ou en mode bac de refroidissement et lequel comporte un fond (12) et des parois latérales (13, 14, 15) en acier inoxydable, tout en étant pourvu d'un dispositif de refroidissement qui refroidit à la fois les parois latérales (13, 14, 15) et le fond (12) et en étant par ailleurs pourvu d'un dispositif chauffant qui réchauffe le fond (12), et lequel est **caractérisé en ce que** le fond (12) est solidaire, à plusieurs endroits, avec une plaque à structure sandwich (20) laquelle est préférentiellement constituée, d'une couche en acier inoxydable (21), d'une couche en aluminium (22) et d'une couche en acier inoxydable (23).

2. Bac de refroidissement et de réchauffement selon la revendication 1, **caractérisé en ce que** plusieurs boulons filetés (16) sont soudés au fond (12), permettant ainsi de visser la plaque à structure sandwich (20) sur le fond (12).

3. Bac de refroidissement et de réchauffement selon les revendications 1 ou 2, **caractérisé et ce que** le dispositif de refroidissement est constitué d'un au moins un tube de refroidissement (18, 19) qui est/sont en appui contre la face inférieure de la plaque à structure sandwich (20) et sur les parois latérales (13, 14, 15).

4. Bac de refroidissement et de réchauffement selon les revendications 1 ou 2, **caractérisé en ce qu'**un canal de refroidissement (24) est incorporé dans la couche du milieu (22) de la plaque à structure sandwich (20) ou qu'un tuyau de refroidissement (25) y est intégré par coulée, et qu'un tuyau de refroidissement (18) est en appui contre lesdites parois latérales.

5. Bac de refroidissement et de réchauffement selon l'une des revendications 1 à 4, **caractérisé en ce que** le dispositif chauffant est constitué d'un au moins un chauffage surfacique en silicone (26) qui est en appui contre la face inférieure de la plaque à structure sandwich (20).
